# EUROPEAN PATENT APPLICATION

(11) **EP 2 253 413 A1**
(43) Date of publication of application: **24.11.2010**
(21) Application number: 09160431.4
(22) Date of filing: 15.05.2009
(51) Int. Cl.: B23K 26/12, H01L 21/306

(54) **Method for laser ablation**

(71) Applicant: National University of Ireland Galway, Galway (IE)
(72) Inventor: Conneely, Alan, Galway (IE); Howard, Helen, Co. Galway (IE); O'Connor, Gerard, Co. Galway (IE); Sedao, Mr., Galway (IE)
(74) Representative: O'Neill, Aoife

(57) **Abstract**

The present invention relates to a method for laser ablation. The method comprises providing a substrate from which material is to be ablated and providing an ambient environment for the laser ablation process, comprising supplying a prescribed assist gas in a prescribed delivery configuration. The method further comprises focusing a laser beam onto the substrate to be ablated at a power density above an ablation threshold of the material to remove material from the substrate in a laser material interaction zone at or adjacent to the focal point of the laser; and controlling the supply of the assist gas and the laser power to generate a liquid phase in the laser material interaction zone in which the ablated matter is suspended.

## Description

### Field of the Invention

The present invention relates to the generation and application of a liquid phase to enhance the process of laser ablation. Specifically the invention relates to a technique for enhanced entrainment, transport, containment and subsequent assembly of laser-ablated matter. At a scientific level the invention centres on laser-material-ambient interactions. In terms of applications the invention is relevant to micro- and nano-scale materials and process engineering.

### Background to the Invention

Laser ablation is the process of ejection of matter from a solid by irradiating it with a laser beam. At sufficiently high laser powers, the ejected matter can be further excited to a plasma phase. Processes based on laser ablation can be used to perform material removal operations, such as drilling, cutting, or etching, and material additive operations such as materials deposition, transfer or nanoparticle growth.

Laser ablation produces particles directly by one or more of the following mechanisms. Photo-spallation is the photomechanical removal of matter from the surface of materials using laser radiation. Homogenous boiling is the creation of a vapor bubble deep within the material in which liquid and vapor phases co-exist; the condensation of the liquid phase of ablated matter produces particulate when ejected from the material surface. Photo-fragmentation is the fragmentation of a thermally softened material; fragments released from surfaces when intensely heated by laser radiation form nano-particles in the ambient. Laser ablation also produces particles indirectly when the vaporized or desorbed matter ejected from the surface of materials during laser beam exposure cools and solidifies. Moreover, the confinement of the laser ablation process within a high aspect ratio feature leads to high and rapidly changing temperature and pressure profiles, which itself can result in micro and/or nano particle generation.

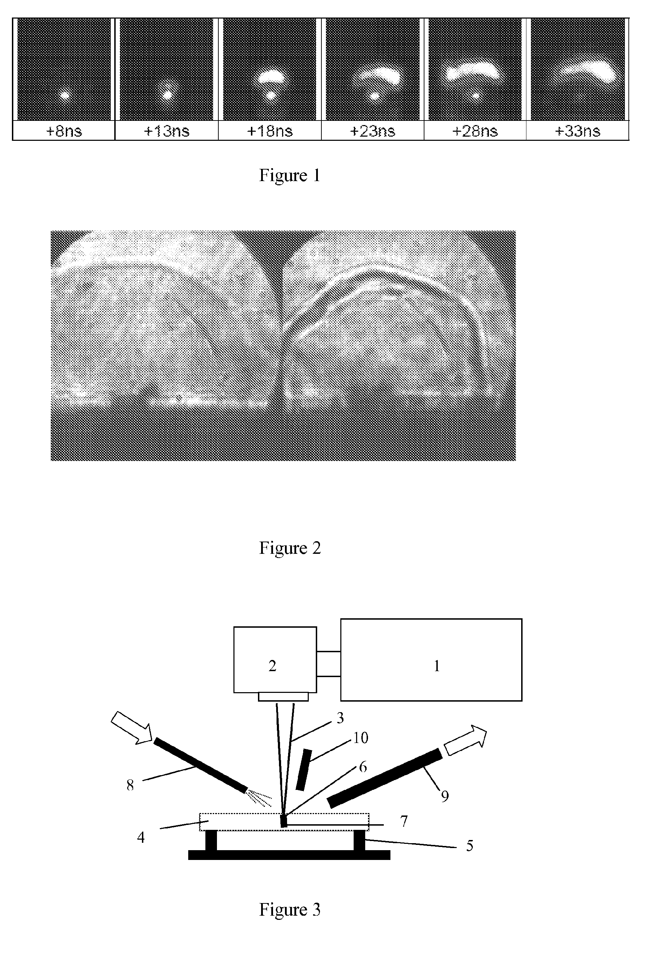

The use of a repetitively pulsed laser to ablate materials is a commonly used technique. In processes based on material removal, repeated passes of overlapping pulses are typically required to ablate materials to a specific depth as only a discrete amount of material is machined per pulse. During the laser ablation process, the energy from the laser pulse is absorbed rapidly and causes a physical or chemical change in the material. If the peak power density or peak irradiance is sufficiently high (> 10⁶ W/cm²) and the interaction time is short (< 10⁻⁶ s), matter can be expelled from the surface. Depending on the irradiance, the expelled matter can consist of ions, atoms, molecules and/or particles comprising these species as nano-clusters or nano-particles, as well as molten forms, such as molten globules of material. Typically the ejected matter is highly ionised and such ions and electrons form a separate phase, typically a plasma, one example of which is illustrated in Figure 1. The plasma expands rapidly away from the surface where the laser material interaction has occurred. The expansion of the dense plasma phase leads to the generation of a shock wave, two examples of which are illustrated in Figure 2. The image on the right shows the shock wave generated during laser ablation in an air ambient. The image on the left shows the shock wave generated during laser ablation in a tetrafluoroethane assist gas ambient. As the shock wave front propagates, at speeds higher than the speed of sound, the pressure, temperature and density of the localised ambient environment behind the travelling shock front will fluctuate rapidly.

There are a number of disadvantages associated with the formation of the plasma and shock wave. The plasma formed by the initial part of a laser pulse may screen the surface of the material being ablated from the later part of the laser pulse. The energy in the later part of the laser pulse (or in subsequent pulses) is thus absorbed by the plasma rather than the material to be ablated, thereby reducing the efficiency of the ablation process. The absorption of laser energy by the plasma increases its internal energy causing it to expand radially. The expansion of highly energetic plasmas perturbs the local ambient and any material with which it interacts.

The shock wave which evolves from an expanding laser-generated plasma plume carries energy and applies a thermo-mechanical impulse to the surrounding matter. Firstly, the shock wave pushes the ambient gas away from the laser material interaction zone. This can create vortices in which ablated matter is entrained and re-deposited close to the laser material interaction zone. Secondly, the shock wave can cause damage to nano- and micro-scale structure in materials. Thirdly, the presence of a shock wave leads to variations in the temperature, pressure, and density gradients of the ablated matter and ambient gases surrounding the laser material interaction zone. The scale of the gradients, which depend on the composition of the ambient through which the shock wave propagates, determines the chemical and physical evolution of the laser-generated particulate.

New laser ablation processes are emerging based on laser pulses of extremely short duration, on the order of femtoseconds or picoseconds. Such processes can be configured to reduce the adverse effects of a heat-affected-zone, such as cracking and melting and offer the advantage of an expanded range of materials which can be processed using laser technology. The disadvantage of such ultra-short processes is that the ablated material tends to form a size distribution of particles with a greater component in nanometre-size range. The hazards associated with such nanoparticles are significant as they can be easily incorporated into the body; for instance, nanoparticles with diameters less than 30 nm have the potential to penetrate both brain and blood barriers.

There are many material removal processes that use laser beams to ablate solids in air or vacuum ambients known to those who are skilled in the art. Assist gases are commonly used to 'assist' a laser machining process by modifying the environment in which laser machining occurs. Two common assist gas processes used in laser-based processes, at ambient pressures, are based on melt shear of a molten phase established in the cut zone by an incident laser beam:
- In inert gas melt shear processes, a high-pressure jet of inert gas (e.g. nitrogen, argon), coaxial with an incident laser beam, can be used to eject a molten phase of the material out through the opposite surface of the cut zone.
- In active gas melt shear processes, a coaxial jet of oxygen is used to enhance the speed and quality for the laser cutting of ferrous materials. The process is based on the generation of an exothermic reaction fed by the chemical reaction of the oxygen, iron, and the additional thermal energy generated during the laser process. Again the molten material, in part heated by the exothermic reaction, is also ejected via the opposite surface of the cut zone.

Recently, attention has focussed on using inert gases to optimise laser ablative processes. Inert gases (Ar, He etc.) may be used to suppress the formation of the laser-generated ionised plasma. Suppressing the plasma raises the efficiency of laser processing by increasing the exposure of the material to the full duration of the pulse. Typically, the assist gas is either delivered coaxially with the laser beam or is applied as a shroud gas via a side nozzle. The entrainment of laser-generated particulate using different, sometimes complex, fluid flow paths or nozzle apparatus is known to those who are skilled in the art.

Laser assisted etching of materials in a halocarbon environment is also well known to those who are skilled in the art. Such processes, based on photochemical and photothermal chemical etching, can be effective in clean material removal at etch rates of the order of nanometres per pulse.

Laser cutting in liquid environments is also known to those who are skilled in the art. Enhanced laser material removal in a water or liquid ambient has also recently been proposed to improve throughput when machining through cuts (i.e. cuts that extend through the entire thickness of the material). Improved throughput may be achieved by using a high-pressure water jet to help cut through materials. The improvement is enabled by light guiding the laser energy within the narrow water jet and using the high-pressure jet of water to push the laser-heated material through the lower surface of the laser cut.

A through cut can also be implemented in materials by using repeated passes of a laser ablative process. In this case, cutting through or into a substrate, a cut (often referred to as a feature, slot or trench) is formed in the substrate. In cases where the aspect ratio of the feature is large, that is where the depth to width ratio of the feature is >1, the removal of the ablated matter is more difficult as the ejected matter is confined by the sidewalls of the laser-ablated cut. When this confinement occurs, the ejection efficiency of the ablated matter from the laser interaction zone decreases. The entrapped ablation by-products are re-deposited and is subsequently re-ablated, hence the effective ablation rate per laser pass decreases accordingly.

Thus, the transport of the ablated material away from the laser material interaction zone is important in maximising the overall net efficiency of the laser ablation or machining process since it reduces the potential for ablated material to be re-deposited. Redeposition of material in the laser interaction zone has the effect of reducing the overall process efficiency, as further laser energy is required to re-ablate this material. To a lesser extent, transport of material away from the laser material interaction zone also reduces the potential screening or blocking of the next laser pulse incident on the surface to be machined.

Improvements have also been obtained in the enhanced entrainment and transport of laser-generated debris by using a static or slowly flowing liquid (sometimes water) ambient. This is attributed to the generation of lift-off forces, assisted through the formation of bubbles in a liquid layer. The expansion of these bubbles helps to remove particles in processes that are similar to laser cleaning. In such processes, the liquid layer or the laser-generated particles may absorb the energy from the laser beam and create bubbles in the liquid which can then displace particles which have adhered to the material surface. The macroscopic flow of the liquid entrains the displaced particles and assists in their removal.

There are cases, however, where a liquid assist is not suitable for machining certain materials. For example, the use of liquid ambients reduces the precision of the laser ablative processes, as vapour bubbles formed at the laser interaction zone scatter the beam. Also, materials adjacent to the laser material interaction zone may be soluble in liquids. Porous materials may retain liquids following processing which may impact subsequent processes. Or, very delicate substrates with protruding features, such as nanowires, could be damaged by a liquid flow.

Finally, there are extensive chemical and physical pathways for generating liquid phases of matter. These include chemical processes that give rise to water, acids, and bases, and physical processes such as condensation which establishes mists and thin coatings of liquids on surfaces. The interaction of such processes with highly dynamic processes, such as laser material interactions, is an active area of research.

US 2005/0274702 describes an apparatus and method for dicing semiconductor wafers using femtosecond or picosecond pulse widths. A gas or liquid assist is used to reduce heating effects. A pressurised source of gas or liquid is said to be utilised to remove debris and eject melt.

WO 2004/079810 describes prior processes that utilise fluorine radicals to etch silicon workpieces. It describes a further process or laser machining silicon workpieces in a halogen atmosphere, in particular an atmosphere of SF₆ (sulphur hexafluoride). The process is said to be conducted so that the assist gas reacts with the workpiece at or near a focus of the laser beam. The laser employed has a wavelength of less than 0.55 microns. This reaction is attributed to dissociation of SF₆ by the laser to from fluorine radicals. It is stated that any debris created during the ablation process is removed in a gaseous form and is not re-deposited as solid debris around the target machined site. However, and on the other hand, it has also acknowledged that some solid debris can be left behind and that debris needs to be removed for example with a dry-wipe or water wash process. The method describes an additional step of providing a gas extraction means for removing waste gas or gas borne debris from the workpiece. F₂ (fluorine) and CF₄ (tetrafluoromethane) are also mentioned as possible assist gases. It is also stated that debris can be removed by de-focusing the laser beam and passing it over the contaminated area. An enclosed chamber is utilised for control of the ambient gas.

### Object of the Invention

An object of the invention is to combine the advantages of performing laser ablation in a dry atmosphere, with a localised liquid phase established in the vicinity of the laser ablation, triggered by the controlled interaction of the laser energy, material and gas ambient.

Another object of the invention is to use a liquid phase generated in a laser-ablation process to modify the chemical and physical evolution of ablated matter following laser ablation.

Another object of the invention is to use a liquid phase to assist in the entrainment of ablated particulate when suspended in an ambient above an ablation zone.

Another object of the invention is to use a liquid phase to alter the chemistry of ablated matter, such as the prevention of oxide formation by the immediate shrouding of ablated matter by a liquid ambient.

Another object of the invention is to create a liquid phase which will assist in the cleaning of particulate from ablated features in materials produced by laser ablation.

Another object of the invention is to reduce the chemical hazard associated with laser ablated species by first nucleating a liquid drop on ablated particulate and subsequently facilitating the coalescence of droplets and particles so that the effective size distribution is altered.

Another object is to use the a liquefaction process, and the liquid phase generated therein, to assist in the aggregation or convective assembly of ablated matter deposited on surfaces during the subsequent evaporation of the liquid phase.

Another object of the invention is to facilitate the incorporation of ablated matter in liquid phases whereby they can be subsequently functionalised.

Another object of the invention is to use a liquid phase to alter properties of the surface of a target material undergoing ablation.

### Summary of the Invention

The invention relates to a method and application for creating a functional liquid phase during laser ablation, in an otherwise dry ambient, to modify surfaces of ablated materials and to assist in the entrainment, transport, containment, aggregation, functionalisation and assembly of laser-ablated matter.

According to an aspect of the invention, there is provided a method for laser ablation, comprising:
providing a substrate from which material is to be ablated;
providing an ambient environment for the laser ablation process, comprising supplying a prescribed assist gas in a prescribed delivery configuration;
focusing a laser beam onto the substrate to be ablated at a power density above an ablation threshold of the material to remove material from the substrate in a laser material interaction zone at or adjacent to the focal point of the laser; and
controlling the supply of the assist gas and/or the laser power to generate a liquid phase in the laser material interaction zone in which the ablated matter is suspended.

The method may further comprise exploiting the liquefied ambient to entrain, transport, contain, functionalise or deposit the laser-ablated matter or functionalise laser processed surfaces.

The generation of a liquid phase may comprise liquefaction of the assist gas and/or liquefaction of one or more by-products generated by removal of material from the substrate at the laser material interaction zone.

The method may further comprise the step of monitoring the generation of the liquid phase in the laser material interaction zone. The step of monitoring may include monitoring at least one of temperature or humidity in the laser material interaction zone to determine when sufficient liquid has been generated. The step of monitoring may comprise providing an image of the laser material interaction zone to determine when sufficient liquid has been generated. The step of providing an image may be achieved using a microscope and/or a camera.

The assist gas may be selected from the group consisting of:
HFC R-134a (tetrafluoroethane);
SF₆;
a mixture of butane and oxygen;
Bronsted acids;
alcohols;
strong acids, including hydrogen iodide (HI), hydrogen bromide (HBr) and hydrogen chloride (HCI); and
a mixture of one or more alcohols and one or more acids.

Supplying the assist gas may comprise supplying the assist gas at a gas flow rate of between 0 and 2 litres per minute. Supplying the assist gas may comprise supplying the assist gas at an angle of about 40 to 45° to the surface of the substrate material.

Supplying the assist gas may comprise supplying the assist gas through a nozzle. The nozzle may have has a supply aperture of between about 0.5mm and about 8mm. For an open flow configuration, the supply aperture may have a diameter of between about 0.5mm and about 2.5 mm in diameter. For a closed flow configuration, the supply aperture may have a diameter of between about 2 mm and about 8mm.

The physical manifestation of the liquefied assist component is dependent on the assist gas flow conditions and can be described as follows:

### Static Flow Rate

Under static flow conditions, that is, between about 0 and about 0.5 1/min of assist gas supplied, for example, through an aperture approximately 4mm in diameter, such as can be achieved in an environmentally sealed chamber, there is no external momentum applied to the liquid component which therefore is largely confined to the laser ablation site. The effect is that the liquid generated in the process stays in the vicinity of the laser interaction zone. The liquid may serve to polish or clean the laser ablated features in the laser material interaction zone. In one embodiment, a fluorinated assist gas is use to provide a fluoride etchant, such as HF, as described above on liquefaction.

### Slow Flow Rate

Under slow flow conditions, that is, between about 0.05 l/min and 0.5 1/min of assist gas supplied, for example as may be achieved by supplying the assist gas through an aperture of about 2.5 mm in diameter, there is a small but significant force applied to the liquid component which moves the liquid in the direction of the assist gas flow. This force and associated movement also tends to cause small liquefied droplets to coalesce to form larger droplets in the region of the machining site. In this approach, minimal gas flow is used to obtain an enhancement in the rate of removal of laser-ablated material from the laser material interaction zone. This range of flow rates may be used to optimise the efficiency of laser ablation processes for precision machining.

### High Flow Rate

Under high flow rate conditions, that is, between about 0.5 1/min and 1.8 l/min supplied, for example, as may be achieved by supplying the assist gas through an aperture of about 0.5 mm in diameter, liquid droplets are rapidly transported from vicinity of the laser material interaction zone. In this regime, gas is delivered to the laser material interaction zone to optimise liquefaction. The liquid droplets coalesce to form a liquid film, in which the laser-ablated material is suspended. The subsequent flow of the liquid film serves to envelope and transport the ablated matter. This regime may be used to enhance removal, transport and subsequent assembly of laser-ablated material.

The step of focussing the laser beam onto the substrate to be ablated may comprise focussing the laser beam onto the substrate in pulses having a duration in the order of nanosecond, picoseconds or femtoseconds, such that the material ablated from the substrate forms nanoparticles. The method may further comprise supplying a turbulent flow of a carrier gas to encourage agglomeration of the nanoparticles.

In this embodiment, droplets of the liquefied assist gas nucleate on the ablated particles, leading to an effective increase in particle diameter (diameter of surrounding droplet is larger than particle diameter). This is achieved by using the appropriate laser parameters, gas delivery and laser-gas interaction. The method may further comprise supplying a turbulent flow of a carrier gas to the machining zone to encourage agglomeration of droplets and particles, leading to actual increases in particle diameter (agglomerated particles).

In embodiments where the pulse duration is in the order of nanoseconds, picoseconds or femtoseconds, the particulate ablated from the substrate is typically nano-scale particulate (nanoparticles), as described above. Droplets of liquefied assist gas, which tend to nucleate on an ablated particle as described above, are propelled in the direction of the expanding shock wavefront and coalesce with other slower-moving liquid droplets as the flow dynamics inside the machined feature return to steady state conditions. In this way, the liquefaction process significantly enhances the cross-sectional area associated with the laser ablated particulate, thereby promoting more efficient aggregation of droplets and the nano-scale particles therein. The liquefied assist gas or assist gas by-products that envelope the particulate reduces the hazards associated with picosecond or femtosecond machining. In addition, the turbulent flow of carrier gas encourages droplet collisions, thereby leading to particle aggregation/agglomeration. Electron microscopy confirms that the aggregation of particles in this liquid phase provides particle agglomerations that are different to those that take place in air ambients. In comparison with particle agglomerations generated in air ambients, those observed during liquefaction are composed of larger fragments and are assembled with greater density for compactness. Depending on the selected assist gas, the chemical composition of the particles also varies.

Immediate agglomeration of nanoparticles produced by laser ablation using picosecond and femtosecond sources minimises the hazards associated with such laser machining, since the agglomerated particles are too large to penetrate the human body such as through the skin, blood and brain barriers. Local liquefaction of the assist gas enhances the aggregration of particles. The containment of particles in this way is preferable to laser machining of materials immersed in a flowing liquid as this approach can lead to distortion of machined features by scattering and bubble cavitation.

The invention discloses how the interaction of the ablated matter with an ambient gas can be used to control or generate a liquid phase, in the vicinity of the laser material interaction, during the laser ablation process. The liquefaction step occurs when a process assist gases, or decomposed by-products of the assist gas (as described below), in which the ablative process proceeds, is controlled to establish a liquid phase for a time interval that is significant so that it can impact either the evolution of the ablated matter or the properties of the target surface.

The proposed process offers competitive advantages over known laser ablation processes carried out in ambient air, vacuum and liquid environments.

One advantage of this invention is an increase in laser machining throughput of between 30% and 100% compared to machining in ambient air. This improvement is achieved due to increased removal of ablated material from the laser interaction zone (as described below), thereby reducing the requirement for additional laser energy to be supplied in order to re-ablate re-deposited material. In the production of narrow slots, for example, the enhancement factor can be in excess of 100%. The presence of the liquid medium has the effect of efficiently transporting ablative by-products from the surface being machined, which enhances the laser machining process in terms of throughput and quality.

Of particular relevance is the advantage over laser ablation performed in liquid ambients. The use of liquid ambients require rapid circulation in a liquid cell in order to prevent the reduction of the precision of the laser ablative processes, caused by vapour bubbles, which scatter the beam, formed at the laser material interaction zone. Also, there are cases where ablation in a liquid bath is not suitable due to the delicate or porous nature of the substrate to be machined or due to the engineering complexity it brings to the laser process. The quantity and size of the liquid droplets produced in the process according to the present invention can be controlled so that they do not significantly impact the incident laser beam. In these respects, the process according to the present invention is still an essentially a 'dry' process, in that the liquefaction only generates small volumes of liquid which rapidly evaporate or are extracted from the process region. These small volumes of liquid are sufficient to create a liquid flow to remove debris, with damage to delicate or porous substrates.

The invention is particularly useful in processes that are sensitive to the generation of particles as it assists in the removal of such particles from surfaces near to the laser-ablated features. It reduces re-deposited particulate in and around the laser-machined feature by enabling an integral self-cleaning laser process. For instance, feature sidewalls machined in ambient air are typically coated with oxide and are rougher compared to the oxide-free, smoother sidewalls, obtained from selected assist gases which lead to the generation of liquid phases. The present invention provides a process that is essentially self-cleaning, thereby greatly reducing the need for an additional cleaning step after laser processing.

The liquefaction process can be arranged to alter the chemistry and surface texture of particles. Depending on the liquid phase established, it impedes oxidation and leads to particles being suspended in liquid ambients of specific pH after their formation.

The present invention enhances the transport of laser-ablated debris away from an ablated feature and, in particular, high aspect ratio features, by modifying the environment in which the laser ablation process occurs by *in-situ* generation of a liquid phase during the laser machining process. The presence of a liquid phase in the vicinity of the surface of the laser-generated trench during machining with an assist gas plays an important part in transporting ablated matter away from the interaction zone.

The present invention enhances the entrainment and transport of laser-ablated matter, which consists of particles with diameters in a size range from nanometres to micrometres. The nucleation of liquid droplets on ablated particulate provides for greater coupling to the macroscopic air and liquid flow. The chemical and physical interaction of the liquid phase with ablated particles is significant in enabling new functionalities at the interface of bio and physical sciences.

The invention discloses how a liquid phase is generated during laser ablation undertaken in a gas ambient. The invention also describes how the liquid phase enhances the intended purpose of the ablative process in either etching a material or generating particles. Of key concern to both of these interactions is the application of the liquid phase to enhance the entrainment, containment, aggregation, functionalisation, and subsequent assembly of ablated matter.

The temperature, pressure, humidity of the macro-environment in which the laser ablation takes place is important to ensure that the liquid phase exists for sufficient time so that it can impact the process. The interactions of certain assist gases during the controlled laser ablative process has the effect of generating liquid in the vicinity of the laser material interaction zone. Depending on the controlled process parameters, the liquid phase may be transient or volatile in nature with rapid conversion to a gaseous state due to evaporation or chemical phase changes. The objective of the process is to ensure that a liquid phase is established and remains present for a sufficient time to impact the process. In current practice the environment in which the process is conducted is set to normal temperatures (20-22°C) and pressures (1 atmosphere). The relative humidity (40% - 50%) of the laboratory environment is also important; in current practice the background relative humidity are set to normal values but these are typically continually monitored during the process.

The invention is applicable to many materials. The interaction of the laser ablated material and the gas is often important and is described later.

The preferred embodiments of the invention are particularly relevant to pulsed laser sources where the pulse duration is on the order of picoseconds or femtoseconds. In these embodiments, the particulate ablated from the substrate has a large fraction of nano-scale particulate (nanoparticles), as described above. Immediate nucleation of droplets or agglomeration of nanoparticles produced by laser ablation using picosecond and femtosecond sources minimises the hazards associated with such laser machining, since the larger particles that result are too large to penetrate the skin, blood and brain barriers. Local liquefaction of the assist gas enhances the aggregration of particles. The liquefied droplets nucleated on an ablated particle are propelled in the direction of the expanding shock wavefront and coalesces with other slower-moving liquid droplets, as the flow dynamics near to the machined feature return to steady state conditions. In this way, the liquefaction process significantly enhances the cross sectional area associated with the laser ablated particulate and thereby promotes more efficient aggregation of droplets and the nano-scale particles therein. The liquefied assist gas or the liquefied gaseous by-products that envelops the particulate reduces the hazards associated with femtosecond or picosecond machining. In addition, the turbulent flow of carrier gas encourages droplet collisions, thereby leading to enhanced particle aggregation/agglomeration. The containment of particles in this way is preferable to laser machining of materials immersed in a flowing liquid as this approach can lead to distortion of machined features by scattering and bubble cavitation.

According to another aspect of the invention, there is provided a method for collection of micro and/or nanoscale particles, comprising the steps of:
providing a substrate from which material is to be ablated;
positioning a sample collector adjacent the substrate;
supplying a prescribed assist gas in a prescribed delivery configuration;
focussing a laser beam onto the substrate to be ablated at a power density above an ablation threshold of the substrate material to remove material from the substrate in a laser material interaction zone at or adjacent to the focal point of the laser to form micro and/or nanoscale particles of ablated material;
controlling the supply of the assist gas and/or the laser power to generate a liquid phase in the laser material interaction zone in which the ablated matter is suspended such that droplets of the liquid phase nucleate on ablated particles and/or form a liquid film; and
collecting the droplets on the sample collector.

The method may further comprise the step of supplying a laminar flow of a carrier fluid to the machining zone to entrain the droplets (nucleated on the particles). Nucleation of droplets on the micro/nanoparticles protects the droplets and increases the effective particle diameter, thereby encouraging entrainment in the laminar flow of carrier fluid. This effect is achieved because viscous forces become dominant over inertial forces for small particles. That is, small particles move by diffusion, whereas larger particles move subject to inertial forces, such as those created by flowing carrier gas. The transport of the entrained particles in the laminar flow minimises collisions between particles, thereby preventing agglomeration of particles.

The droplets may be entrained in a laminar flow of a carrier liquid. A flow of carrier liquid may be provided over the collection surface of the collector to entrain the droplets.

The sample collector may comprise a silicon trapping wafer. The wafer may be positioned vertically, adjacent the substrate. Alternatively, the wafer may be positioned at an angle to the vertical in order to encourage flow of carrier liquid along its surface. In an embodiment, the assist gas is supplied at one side of the substrate, and the sample collector is positioned at an opposite side of the substrate, so that the sample collector is placed in the (exit) path of the laser-ablated material.

Of central importance to different embodiments of the invention, is the requirement that the assist gas must have the property of being capable of creating a liquid phase following its interaction with the thermodynamic conditions and the chemistry of the ablated region in the confined region immediately above the laser ablation zone.

According to embodiments of the invention, the assist gas may comprise a fluorinated gas, such as a hydrofluorocarbon (for example, R-134a (tetrafluoroethane)), or sulphur hexafluoride (SF₆). The assist gas may comprise a combustive mixture of one or more hydrocarbons and oxygen. The assist gas may comprise any suitable material which is a proton donor as in the case of Bronsted acids. The assist gas may comprise one or more alcohols. The assist gas may additionally or alternatively comprise one or more acids, such as hydrogen iodide (HI), hydrogen bromide (HBr) or hydrogen chloride (HCI). One or more alcohols combined with one or more acids are also possible, for example, alcohol mixed with Bronsted acid. *In-situ* generation of HF is desirable for materials that are etched by HF such as silicon workpieces, glass workpieces etc.

In one embodiment of the process, the highly energised local environment which follows a laser ablative pulse, can give rise to the decomposition of the assist gas into smaller molecules, ions, etc by thermal or photo-chemical decomposition. The by-products of this decomposition process on their own, or in combination with the ablated species, can lead to the formation of new chemical compounds which result in a liquid phase within the environmental conditions of the laser machining area.

In another embodiment, a liquid phase can be generated during the controlled combustion of a fuel gas in the laser interaction zone. For example, if butane and oxygen are both carefully supplied to the laser interaction zone, a combustion reaction, ignited by the laser pulse, will result which will generate H₂O and CO₂. Under specific conditions H₂O will condense to form a water film.

2 C₄H₁₀ + 13 O₂ → 8 CO₂ + 10 H₂O

In this case the fuel and oxygen gases are delivered to the laser interaction zone. In one example, the flow rate for butane was carefully adjusted to be of the order of∼0.2 litres min⁻¹. Oxygen gas flow was set higher as per the reaction equation. The laser process consisted of approximately 14 uJ per pulse, delivered to a spot of 30 µm diameter, which was repetitively pulsed at 30 kHz and scanned at a linear velocity of 50 mms⁻¹. Other fuel gases can also be considered in further embodiments of the invention.

In other embodiments of the invention, different mechanisms for generating a liquid phase are also proposed. One such mechanism includes dehydration of alcohol vapors delivered to the laser interaction zone to produce a liquid phase, including water. Relevant reactions are those which take place by the addition of heat, light or by chemically assisting the fragmentation of the assist gas molecule. Of particular relevance to dehydration is the protonation and removal of a hydroxyl group so that the alcohol can produce liquid water and other byproducts such as esters or alkenes.

Dehydration of other materials, and in particular, organic compounds such as acids, can also be used as a mechanism for the *in-situ* formation of water. Other mechanisms can also form desirable liquids such as water. Such mechanisms can be based on decomposition of other gaseous compounds. For example, hydrogen halides may be formed *in-situ* which in turn react with oxygen (either delivered or ambient). One exemplary reaction is 4HI+O₂->2H₂O + 2I₂.

In a similar way, the decomposition of a strong acid (such as hydrogen iodide, hydrogen chloride, hydrogen fluoride or another strong acid) in an oxygen ambient can also produce a gas and water. Where the gases produced are toxic, the process may be undertaken in an enclosed chamber.

In another embodiment, the action of the laser process induces a shock wave travelling through the ambient environment, which can comprise the assist gas and decomposed assist gas by-products, to produce shock liquefaction. Shock liquefaction can be explained due to the rapid cooling of the ambient caused by the compression and rarefaction cycles within the shock wave. The pressure of the gas behind the travelling shock front, deferred from high-speed imaging, indicates that the assist gas is likely to be supersaturated in the confined space of a deep-machined cut or feature with a high aspect ratio. The expansion of the laser-generated plume alters the temperature and pressure profile which facilitates the condensation of the ambient or its components, in cases nucleated by ablated matter or the side walls of the laser ablated feature. The geometry of the confined region is predicted by computational analysis to be particularly important to this embodiment.

In all embodiments, the degree of liquefaction achieved depends on the liquefaction mechanism, the control of the laser, gas, and material parameters. Of these parameters, the control of the gas type and flow are most important.

The process may be applied to any substrate material. However, selection of the substrate material may play an important part in the generation of the liquid phase. Examples of suitable substrate materials are silicon, SiO₂, ceramic, Al₂O₃, SiC, GaN, copper and metal alloys.

The approach in this invention is to deliver an assist gas (or gases) in which a suitable combination of the laser, the material being ablated, the feature being formed by ablation, and post-ablation temperature and pressure can be selected so as to form a liquid in a laser ablation process. The criteria for consideration in liquefaction are:
- The degree of confinement - it is desirable to confine the assist gas and ablated matter so that they interact. This can be achieved by selecting a structure or geometry which suitably confines the assist gas and ablated matter so that upon ablation interaction of the assist gas and ablated material occurs;
- Supply rate of the assist gas (or gases). An appropriate mass flow rate, which is sufficient to cause generation of the liquid phase and to maintain it in an intact liquid film is required.
- Control of the temperature, pressure and humidity of the ambient in which ablation occurs/liquefaction takes place.

The present invention also provides use of a liquefied fluorinated assist gas to etch a surface of a material in a laser ablation process. When fluorinated assist gases are employed in a laser ablation process with suitable laser illumination, hydrogen fluoride may be produced. The hydrogen fluoride may enable laser-assisted etching of certain materials which are chemically susceptible to attack by HF. These materials include, but are not limited to, glasses, quartz and silica. In order to achieve this effect, the assist gas may be supplied to the laser ablation process at a flow rate between 0 and about 0.05 1/min. The assist gas may be supplied to the laser ablation process through an aperture of approximately 4mm in diameter.

The present invention also provides use of a laser ablation process to generate a fluoride etchant close to a high aspect ratio laser-ablated feature.

The present invention provides use of a liquefied assist gas (or liquefied by-products) to coat or functionalise laser-ablated particles in a laser ablation process. The laser ablation process is a femto- or picosecond laser ablation process as described above, such that the laser-ablated particles are nanoparticles.

The present invention provides use of liquefied assist gas to surface structure and order a silicon substrate in a laser ablation process. The use may give the structured or ordered silicon region specific optical properties altered from those of the unprocessed silicon, which may include varied or enhanced optical absorption or reflection properties. In a preferred embodiment, the broad spectral band of high to total optical_ absorption of light is produced so that the silicon approximates a blackbody over these_ spectral regions.

### Brief Description of the Drawings

Figure 1 is a series of spectral images of laser-generated plasmas for nanosecond ablation on a silicon target material;
Figure 2 is two shadowgraphy images of laser material interactions in air and tetrafluoroethane (R-134a) ambient, respectively;
Figure 3 is a schematic diagram of an open flow configuration setup for implementing of a laser based liquefaction process according to the present invention;
Figure 4 is a graph showing relative humidity and temperature over time during liquid phase generation in R-134a gas assisted machining of silicon wafers;
Figure 5 is a series (starting at top left) of time-resolved images showing liquid formation during R-134a assisted laser machining;
Figure 6 is a schematic diagram of an apparatus for entrapment of laser-ablated particles enveloped in liquid droplets according to the present invention;
Figure 7 is a series of time-sequenced images showing droplets observed on the trapping wafer of Figure 6 and the evaporation of these droplets;
Figure 8 is a schematic diagram of a closed configuration setup for implementing a laser based liquefaction process according to the present invention;
Figure 9 is a schematic diagram of a simple apparatus for entrapment of laser-ablated particles enveloped in liquid droplets using a thin flowing layer of liquid in accordance with the present invention; and
Figure 10 is a series of images showing the formation of a cubic micro-particle near to a series of laser-ablated craters on a horizontal surface of silicon.

### Detailed Description of the Drawings

An open flow configuration apparatus for implementing the method of the present invention is shown in Figure 3. A beam 3 from a pulsed laser source 1 is transmitted through a beam delivery system 2, which focuses and scans the beam 3 on a surface of a target material 4 which is placed on a moveable fixture 5. Ablation takes place at the focal spot 6 of the laser beam, or below the laser spot, at the lower surface of a deep narrow feature 7. Collectively, the focal spot 6 and the lower surface of the feature 7 are referred to as the laser material interaction zone. An assist gas flow is introduced and delivered through a needle-like nozzle 8 in the direction shown by the arrow, so that it is effectively coupled to the laser material interaction zone. The ablated matter, along with the gas ambient that emerges from the feature, is extracted from the laser material interaction zone using an active exhaust 9 in the direction shown by the arrow. A sensor 10 monitors the laser material interaction zone; this includes sensors to monitor temperature and humidity or a microscope and camera to visualise liquefaction. The sensor is positioned between the laser material interaction zone and the exhaust extract. The entire process is conducted in an enclosed chamber or workstation.

In the setup shown in Figure 3, the material 4 that is to be processed is placed on the sample fixture 5. A laser source 1 is chosen which is suitable to ablate the material. This means that the wavelength of light emitted by the laser must be absorbed by the material. The energy delivered by the laser must be sufficient to ablate or lead to the ejection of matter from the material surface. In such cases the laser pulse energy per unit area must be greater than the threshold energy per unit area required to ablate the material. This latter term, known as the ablation threshold, varies for different materials and laser parameters. The area to which the laser beam is confined on the surface is determined by optical components used in the beam delivery system 2. In addition, the beam delivery system 2, the moveable fixture 5, or a combination of both systems, is used to move the focused beam 3 over the surface of the material to be processed.

The components of the apparatus described above are integral to performing the laser ablative step on the material. Methods to implement this optimisation are well known to those who are skilled in the art. In the preferred embodiment parameters for the laser (pulse energy, repetition rate, pulse duration, wavelength, beam size) are first set to optimise laser ablation. Adjustments are then made to the laser parameters to optimise the generation or application of the liquid phase.

In the open flow configuration shown in Figure 3, the arrangement of the gas flow and of the extraction of the exhaust principally determines the degree of liquid formation. The general direction of the gas flow relative to the laser beam scan direction is an important consideration. Optimal results are obtained when the gas flow is in the same direction as the scanning laser beam; this helps to push the liquid and ablated matter away from the laser interaction zone towards the extract or collection facility. The extraction of the vapour exhaust from the process, which includes gas, entrained air, and liquid droplets suspended in the ambient, is also an important consideration. In practice, the exhaust is extracted in the same general direction as that in which the assist gas is introduced, and the rate of extraction is set to be marginally higher than the rate of gas supply.

The gas flow nozzle 8 comprises a hollow needle-like apparatus with an internal diameter in the range 0.5 - 2.5 mm. The orientation of the gas flow nozzle relative to the material surface is set to be approximately 45°. The tip of the needle is set at a stand-off height and distance of 5 mm from the laser material interaction zone. The degree of liquefaction obtained is found to be sensitive to the precise angle, position and stand-off height of the gas delivery needle 8 relative to the laser material interaction zone. At non-optimal angles, it is found that the gas is not effectively delivered to the often-confined space of the laser material interaction zone, and therefore the formation of liquid is significantly reduced. The gas delivery nozzle 8 is therefore mounted on XYZ translational stages and the angle of orientation to the surface can be easily adjusted. To maintain the appropriate orientation when ablating over large areas, it is desirable that the fixture 5 comprises an independent XY motion stage so that the material 4 can be maintained in the appropriate position relative to the gas delivery nozzle 8.

The delivery of the assist gas, or gases, is determined by a volume or mass flow meter. The flow rate must be sufficient to supply the liquid generating step of the process and to maintain an appropriate quantity of liquid droplets or liquid thin film, so that it will impact the process of laser ablation. At excessively high flow rates, the liquid drops or thin liquid films that are generated can be disrupted so that it has little impact on the ablation process. The flow rate investigated to date has been typically in the range of between 0 and 2 litres min⁻¹. In practice, the precise flow rate for the assist gas is adjusted depending on the gas, the gas delivery system, laser parameters, material properties and geometry to be ablated or the intended purpose of the liquefaction process. These optimal values are determined by experimentation by directly monitoring the response from the thermophysical sensor(s) 10 or by assessing the impact of the liquefaction on the intended purpose of the process.

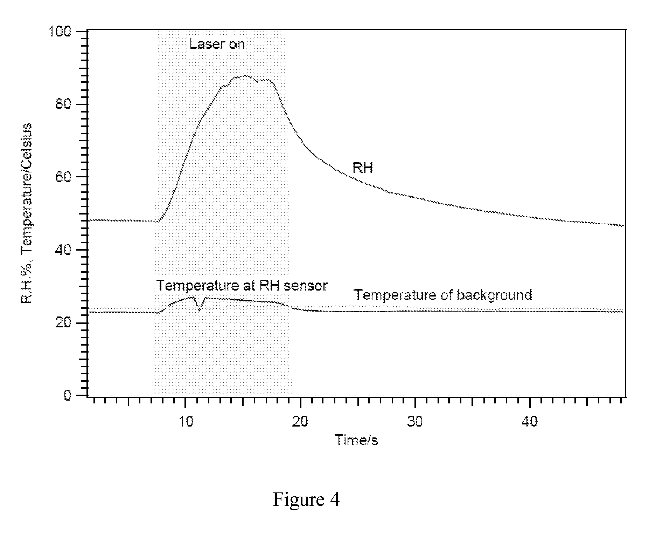

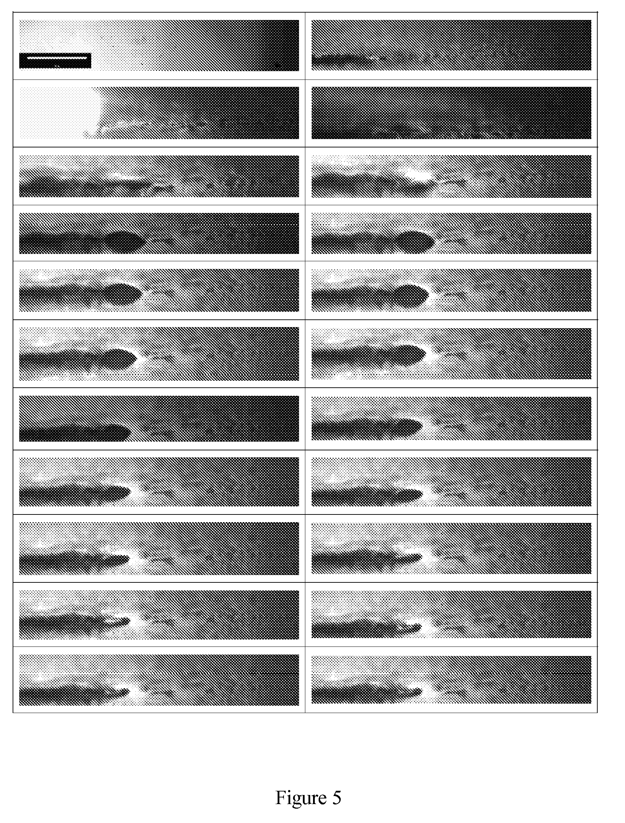

Examples of the response from the sensors 10 are shown in Figures 4 and 5. Figure 4 shows the variation in the signal from a relative humidity and temperature sensor (LinPiccoA05) and thermocouple sensor (PTFE type-K, part 409-4908 TM Electronics), respectively, during liquefaction produced in R-134a gas for nanosecond laser ablation of silicon. A mass flow rate 4.7g min⁻¹ (flow rate 1.1 litre min⁻¹) was delivered to the surface in the orientation described above. Figure 5 shows real time images of the liquefaction produced in the vicinity of a laser ablated region on a silicon wafer for the same process.

An important aspect of the open flow configuration is that there is a small but significant force applied to the liquid phase that is nucleated on the ablated matter. This force moves the liquid in the same direction as the assist gas flow. The force generated by the flowing gas and repetition rate of the laser source are optimised so that the liquid droplets are sufficiently displaced so that the optical energy delivered by the next laser pulse is not scattered significantly. In cases where scattering by the liquid phase does occur it creates a textured surface in the vicinity of laser machined features.

The force and associated movement of the flowing gas and extract causes small liquefied droplets to flow and coalesce to form larger droplets in the region of the machining site. The liquefaction process thereby leads to the entrainment, transport and aggregation of particles. The entrainment and transport occurs at a superior rate than that expected by the diffusion of ablated particles under normal non-assisted ablation. Aggregation occurs if the liquid subsequently evaporates and the surface tension of the evaporating drop brings the suspended matter together to form a solid mass. In cases where the ablated matter has been dissolved by the liquid phase, it is proposed that the evaporating droplet also ultimately leads to aggregation; in this case it occurs by the precipitation of the solute as the volume of the droplet solvent is reduced.

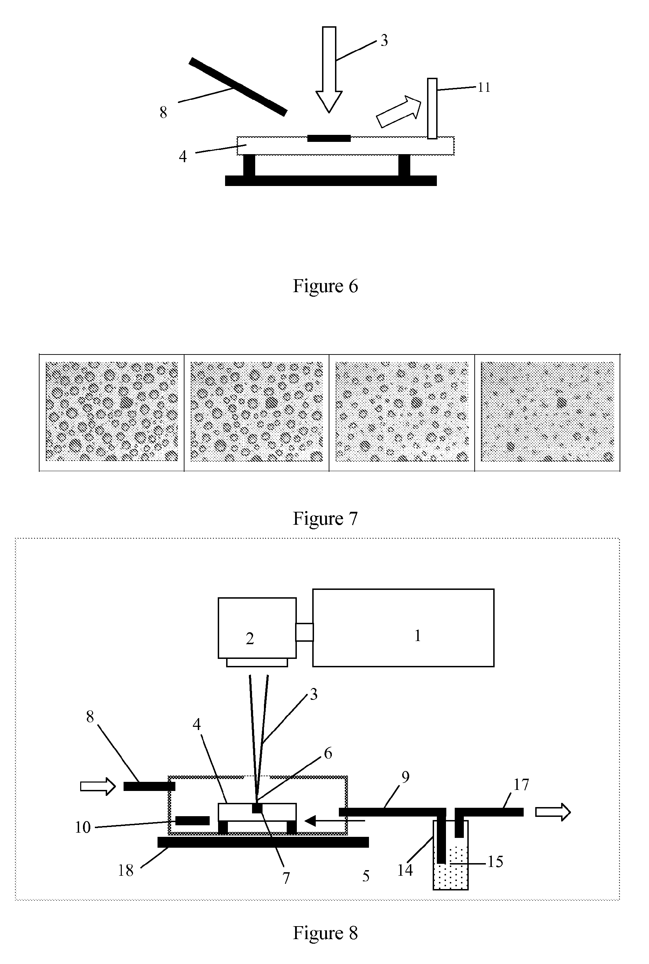

Figure 6 shows an apparatus for entrapment of laser-ablated particles enveloped in liquid droplets embodiment. A flowing gas nozzle 8 delivers the assist gas and a laser beam 3 ablates a target material 4. The ablated matter and assist gas together generate a liquid phase. The force exerted on the liquid phase by the flowing assist gas and extract 9 causes the ablated matter and liquid phase to be directed towards an entrapment wafer 11.

Figure 7 shows a series of time-sequenced images, separated by seconds, showing the gradual evaporation of droplets revealing the particulate on which the droplet nucleated. The material used is silicon and the parameters are the same as those described above.

In another embodiment of the invention, laser ablation in an enclosed configuration is used. An apparatus for carrying out this embodiment is shown in Figure 8. In this configuration, the beam 3 from a pulsed laser source 1 is transmitted through a scanning beam delivery system 2 and process window 12. The beam 3 is focused on the surface of a target material 4 which is placed on a static fixture 5 inside a processing cell 13. Ablation takes place at the focal spot 6 of the laser beam 3 or below the laser spot, at the lower surface of a deep narrow feature 7. The assist gas flow is introduced and delivered in the direction of the arrow through a large area tube 8, having an internal diameter of between 2 and 8mm, so that it purges other ambient gases from the laser processing cell through the passive extract port 9. The extract can be delivered to a fluid cell 14 where the ablated matter and/or liquid phase can be entrained in another liquid source 15. Excess pressure generated in the fluid cell can be vented through an external port 17 towards the extract associated with the laser workstation in the direction shown by the arrow. Again, a multifunctional sensor 10 monitors the temperature, pressure or humidity of the laser-processing cell. The laser-processing cell is also mounted on a moveable stage 18. The entire process is conducted in an enclosed workstation.

In this second embodiment, a static gas or a relatively slow flow of gas is used in the process. The gas entry nozzle 8 is arranged so that it is above the laser material interaction zone. The extract port 9 is located below the surface on the opposite side of the chamber. In this configuration, the flow of the gas is static or miniscule with flows as low as - 0.04 litres min⁻¹ having been demonstrated. Under such static or near static flow conditions, such as can be achieved in an environmentally sealed chamber, there is no external momentum applied to the liquid phase. The effect is that the liquid generated in the process stays in the vicinity of the laser interaction zone. For the liquid phases that are generated, this leads to surface features formed by aggregated particulate and etched surfaces.

The inclusion of a fluid cell 14 enables the entrainment of ablated matter and liquid droplets. The chemical nature of the entrained species can be chemically analysed. Typically a simple inert liquid can be used to entrain the ablated matter and liquid phases that are produced.

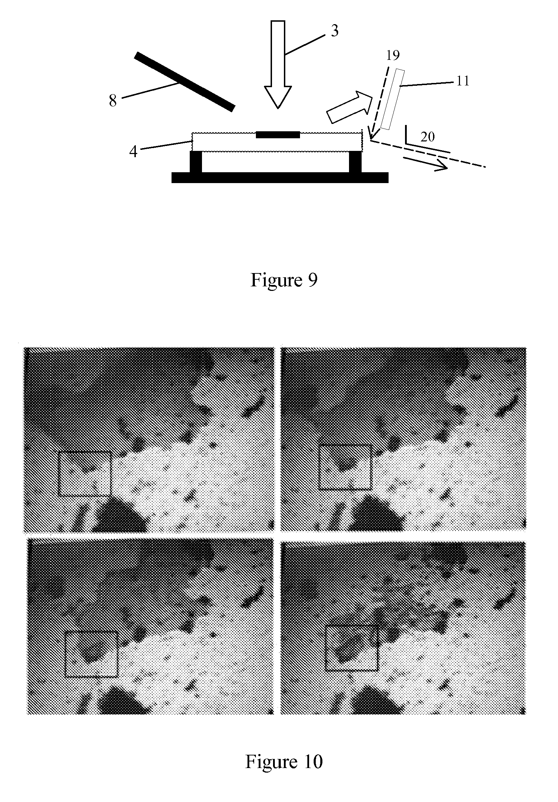

Figure 9 shows an apparatus for entrapment of laser-ablated particles enveloped in liquid droplets using a thin flowing layer of liquid. In this embodiment, the assist gas is supplied at one side of the substrate through nozzle 8, and a sample collector 11 is positioned at an opposite side of the substrate, so that the sample collector is placed in the path of the laser-ablated material. The solid-state sample collector 11 comprises a silicon trapping wafer. A thin layer of carrier liquid 19 can be directed over the surface of the smooth solid-state collector 11. The wafer or other solid-state collector device may be positioned vertically in the exhaust from the process. In the embodiment shown in Figure 9, the solid surface 11 is inclined slightly to the horizontal to encourage liquid flow over its surface. The laser-ablated particles which are incident on the wafer adhere to, and are entrained in, the liquid; the laser ablated particles are thus incorporated into this flow. The flowing liquid and the suspended ablated matter are then either collected or directed for subsequent use using an appropriate collector 20. The concept of liquid sample collector 14 shown in Figure 8 may also be applied to this arrangement.

The collection method may further comprise the step of supplying a laminar flow of an alternative carrier fluid above the laser material interaction zone to entrain the droplets (nucleated on the particles). Nucleation of droplets on the micro/nanoparticles protects the droplets and increases the effective particle diameter, thereby encouraging entrainment in a laminar flow of carrier gas or liquid. This approach counteracts the fact that viscous forces become dominant over inertial forces for small particles. That is to say that while a small particle moves by diffusion, an ablated particle enveloped within a larger droplet, will move subject to inertial forces -such as those created by the flowing carrier gas or liquid. The transport of the entrained particles in the laminar flow minimises collisions between particles, thereby preventing agglomeration of particles. The chemical and thermophysical properties of the volume through which the laminar flow occurs can be adjusted to remove the liquefied component and to tailor the subsequent evolution of particles. Entrapment and convective assembly of particles, while entrapped in liquid can facilitate the activation of particles surfaces and integrated assembly of particles in specific arrangements on devices.

In another embodiment, the assembly of particles suspended in a liquid phase can be achieved. The material is ablated in a gas ambient, the liquid phase is nucleated on the ablated matter, the ablated particles and liquid phase are transported to a surface, the liquid phase evaporates and while so doing the ablated matter is assembled according to a template or a crystal structure. Figure 10 shows a time sequence of images of the reassembly of a cubic polycrystalline structure of ablated silicon as the liquid phase evaporates. The images in sequence, (top left, top right, bottom left, bottom right) are separated by -4 seconds. They show the gradual formation of the micron-sized cubic structure as the liquefied component of the ambient, R-134a, evaporates. The structure is formed by using a 20 nanosecond UV laser, with a 50 micron diameter focused spot, operating at repetition rate of 30 kHz, providing 13.3 microjoules per pulse, while being scanned at 30mm/s to create an ablated trench in a R-134a gas open configuration flow (4.7 g min-1) where the nozzle is orientated at 40° to sample surface. The scan direction is optimised to collect aggregate and liquid on the down stream side of the ablated feature. The evaporation of the liquid takes seconds and leads to the assembly of a polycrystalline crystalline structure.

The invention will be described in more detail with reference to the following examples.

### Example 1

A first example is based on the decomposition of a fluorinated assist gas, such as tetrafluoroethane R-134a. In an open flow configuration at atmospheric pressure, R 134a decomposes forming HF and COF₂ upon exposure to a hot surface with a temperature in excess of 500 K. COF₂ also reacts with moisture in air forming liquid HF and CO₂. Therefore laser-induced liquefaction of HF, in the vicinity of the ablation, is likely for gas ambients consisting of R-134a, when the R-134a gas interacts with a sufficiently hot ambient. Therefore, sufficient laser energy is required to thermally decompose the R-134a gas; this was approximately 20uJ per pulse, delivered to a spot of 30 µm diameter, which was repetitively pulsed at 20 kHz and scanned at a linear velocity of 50 mms⁻¹. These values are representative for nanosecond laser exposures at 355 nm radiation.

### Example 2

A second example is based on decomposition of an SF₆ ambient, which also produces a liquid phase. The laser parameters used are similar to the R-134a example above. In an open flow environment, the gas flow rate used to demonstrate the process is 5.8 g min⁻¹ (0.93 litres min⁻¹). The process to attain liquefaction is more complex, but depending on the target material (M), the gas is understood to produce volatile compounds MFₓ and SF₄. SF₄ in turn reacts with H₂O (in air) to produce SOF₂ and HF.

Each of these examples is based on the generation of hydrogen fluoride (HF). HF has an important property in that under standard temperature and pressure (STP), it condenses at 19.5 °C whereas the other hydrogen halides condense at much lower temperatures. The properties of the surrounding gas ambient are important to ensure that an intact liquid film of HF is generated and maintained for a significant time on the order of seconds to minutes.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method for laser ablation, comprising:
providing a substrate from which material is to be ablated;
providing an ambient environment for the laser ablation process, comprising supplying a prescribed assist gas in a prescribed delivery configuration;
focusing a laser beam onto the substrate to be ablated at a power density above an ablation threshold of the material to remove material from the substrate in a laser material interaction zone at or adjacent to the focal point of the laser; and
controlling the supply of the assist gas and/or the laser power to generate a liquid phase in the laser material interaction zone in which the ablated matter is suspended.

2. The method of claim 1, further comprising:
exploiting the liquefied ambient to entrain, transport, contain, functionalise or deposit the laser-ablated matter or functionalise laser processed surfaces.

3. The method of claim 1 or claim 2, wherein the generation of a liquid phase comprises liquefaction of the assist gas and/or liquefaction of one or more by-products generated by removal of material from the substrate at the laser material interaction zone.

4. The method of any preceding claim, further comprising:
monitoring the generation of the liquid phase in the laser material interaction zone.

5. The method of claim 4, wherein the step of monitoring includes monitoring at least one of temperature or humidity in the laser material interaction zone to determine when sufficient liquid has been generated.

6. The method of any preceding claim, wherein the assist gas may be selected from the group consisting of:
HFC R-134a (tetrafluoroethane);
SF₆;
a mixture of butane and oxygen;
Bronsted acids;
alcohols;
strong acids, including hydrogen iodide (HI), hydrogen bromide (HBr) and hydrogen chloride (HCI); and
a mixture of one or more alcohols and one or more acids.

7. The method of any preceding claim, wherein supplying the assist gas comprises supplying the assist gas at a gas flow rate of between 0 and 2 litres per minute.

8. The method of any preceding claim, wherein supplying the assist gas comprises supplying the assist gas at an angle of about 40 to 45° to the surface of the substrate material.

9. The method as claimed in any preceding claim, wherein the step of focussing the laser beam onto the substrate to be ablated comprises focussing the laser beam onto the substrate in pulses having a duration in the order of nanoseconds, picoseconds or femtoseconds, such that the material ablated from the substrate forms nanoparticles.

10. The method of claim 9, further comprising supplying a turbulent flow of a carrier gas to encourage agglomeration of the nanoparticles.

11. A method for collection of micro and/or nanoscale particles, comprising the steps of:
providing a substrate from which material is to be ablated;
positioning a sample collector adjacent the substrate;
supplying a prescribed assist gas in a prescribed delivery configuration;
focussing a laser beam onto the substrate to be ablated at a power density above an ablation threshold of the substrate material to remove material from the substrate in a laser material interaction zone at or adjacent to the focal point of the laser to form micro and/or nanoscale particles of ablated material;
controlling the supply of the assist gas and/or the laser power to generate a liquid phase in the laser material interaction zone in which the ablated matter is suspended such that droplets of the liquid phase nucleate on ablated particles and/or form a liquid film; and
collecting the droplets on the sample collector.

12. The method of claim 11, further comprising the step of supplying a laminar flow of a carrier fluid to entrain the droplets of assist gas and transport them from the machining zone.

13. Use of liquefied assist gas to remove laser-ablated material from a laser material interaction zone in a laser ablation process.

14. Use of a liquefied fluorinated assist gas to etch a surface of a material in a laser ablation process.

15. Use of a liquefied assist gas to coat or functionalise laser-ablated particles in a laser ablation process.

16. Use of liquefied assist gas to structure a silicon surface in a laser ablation process.
